# EUROPÄISCHE PATENTSCHRIFT

(11) **EP 3 078 985 B1**
(45) Veröffentlichungstag und Bekanntmachung des Hinweises auf die Patenterteilung: **14.03.2018**
(21) Anmeldenummer: 16161687.5
(22) Anmeldetag: 22.03.2016
(51) Int. Cl.: G01S 17/42, G01S 7/481, G01S 7/497

(54) **OPTOELEKTRONISCHER SENSOR UND VERFAHREN ZUR TRANSMISSIONSÜBERWACHUNG EINER FRONTSCHEIBE**
OPTOELECTRONIC SENSOR AND METHOD FOR TRANSMISSION MONITORING A WINDSHIELD
CAPTEUR OPTOELECTRONIQUE ET PROCEDE DE SURVEILLANCE DE TRANSMISSION D'UN DISQUE FRONTAL

(30) Priorität: 08.04.2015 DE 102015105264
(43) Veröffentlichungstag der Anmeldung: 12.10.2016
(73) Patentinhaber: SICK AG, 79183 Waldkirch (DE)
(72) Erfinder: Engler, Michael, 79350 Sexau (DE); Hammes, Markus, 79117 Freiburg (DE); Krämer, Joachim, 79249 Merzhausen (DE); Meyer, Christof J., 79261 Bleibach (DE)

(56) Entgegenhaltungen:
- EP-A1- 2 447 733
- EP-A1- 2 482 094
- EP-A1- 2 508 914
- EP-A2- 0 924 535
- WO-A1-2007/031359
- DE-U1- 9 321 155
- DE-U1-202009 004 397
- US-A1- 2008 158 555

## Beschreibung

Die Erfindung betrifft einen optoelektronischen Sensor und ein Verfahren zur Transmissionsüberwachung einer Frontscheibe eines optoelektronischen Sensors nach dem Oberbegriff von Anspruch 1 beziehungsweise 10.

Für optische Überwachungen werden häufig Laserscanner eingesetzt. Darin überstreicht ein von einem Laser erzeugter Lichtstrahl mit Hilfe einer Ablenkeinheit periodisch einen Überwachungsbereich. Das Licht wird an Objekten in dem Überwachungsbereich remittiert und in dem Scanner ausgewertet. Aus der Winkelstellung der Ablenkeinheit wird auf die Winkellage des Objektes und aus der Lichtlaufzeit unter Verwendung der Lichtgeschwindigkeit zusätzlich auf die Entfernung des Objektes von dem Laserscanner geschlossen. Dabei sind zwei grundsätzliche Prinzipien bekannt, die Lichtlaufzeit zu bestimmen. Bei phasenbasierten Verfahren wird das Sendelicht moduliert und die Phasenverschiebung des empfangenen gegenüber dem gesendeten Licht ausgewertet. Bei pulsbasierten Verfahren, wie sie in der Sicherheitstechnik bevorzugt eingesetzt werden, misst der Laserscanner die Laufzeit, bis ein ausgesandter Lichtpuls wieder empfangen wird.

Eine wichtige Anwendung ist die Absicherung einer Gefahrenquelle in der Sicherheitstechnik. Der Laserscanner überwacht dabei ein Schutzfeld, das während des Betriebs der Maschine von Bedienpersonal nicht betreten werden darf. Da der Laserscanner Winkel- und Entfernungsinformationen gewinnt, können zweidimensionale Positionen von Objekten in dem Überwachungsbereich und damit auch in dem Schutzfeld ermittelt werden. Erkennt der Laserscanner einen unzulässigen Schutzfeldeingriff, etwa ein Bein einer Bedienperson, so löst er einen Nothalt der Maschine aus.

In der Sicherheitstechnik eingesetzte Sensoren müssen besonders zuverlässig arbeiten und deshalb hohe Sicherheitsanforderungen erfüllen, beispielsweise die Norm EN13849 für Maschinensicherheit und die Gerätenorm EN61496 für berührungslos wirkende Schutzeinrichtungen (BWS). Zur Erfüllung dieser Sicherheitsnormen sind eine Reihe von Maßnahmen zu treffen, wie beispielsweise sichere elektronische Auswertung durch redundante, diversitäre Elektronik, Funktionsüberwachung und/oder Vorsehen von einzelnen Testzielen mit definierten Reflexionsgraden, die unter den entsprechenden Scanwinkeln erkannt werden müssen.

Eine weitere dieser Sicherheitsanforderung ist die Erkennung einer Beeinträchtigung der Transmission einer Frontscheibe des Laserscanners, auf die bei Einschränkung der Detektionsfähigkeit mit einer sicherheitsgerichteten Abschaltung reagiert werden muss. Dabei ist sowohl eine homogene Verschmutzung, etwa durch Staub, als auch eine punktuelle Beeinträchtigung durch kleine Störobjekte ab einer festgelegten Mindestgröße aufzudecken. Ebenfalls auszuschließen ist eine bewusste Manipulation durch Abdeckung von Frontscheibenbereichen mit kleinen Abschattungsobjekten.

Zur Aufdeckung solcher Störeinflüsse verwendet ein Laserscanner üblicherweise optische Testkanäle, die verschiedene Positionen des Frontscheibenbereichs mittels Durchstrahlung prüfen. In einer beispielsweise aus der DE 43 45 446 C2 bekannten Lösung werden über den gesamten Winkelbereich der Frontscheibe eine Vielzahl unabhängiger optischer Testkanäle verteilt, die entsprechend unterschiedliche Bereiche der Frontscheibe testweise durchstrahlen und dadurch eine beeinträchtigte Transmission erkennen. Die Verteilung der Testkanäle muss dicht genug sein, um trotz nur punktueller Detektion die von der Norm geforderten kleinen Verschmutzungs- oder Manipulationsobjekte überall sicher zu detektieren. Eine große Zahl von Testkanälen erhöht natürlich die Herstellkosten und den benötigten Bauraum. Außerdem liegen die Testkanäle recht nahe an der Außenkontur des Laserscanners, um der drehenden Ablenkeinheit auszuweichen. Damit werden sie anfällig für Störungen durch Fremdlicht und zufällig oder zur Manipulation in der Nähe befindliche Reflektoren. Um definierte Prüfbereiche zu erhalten, müssen die optoelektronischen Bauelemente aufwändig mit Blenden partiell abgeschattet werden.

Bei Laserscannern mit biaxialem Aufbau, also nebeneinander verlaufendem Sende- und Empfangslichtstrahl, ergibt sich ein zusätzliches Problem mit kleinen Abschattungsobjekten auf der Frontscheibe, das originär nicht deren Transmissionsfähigkeit betrifft, aber herkömmlich auch durch die Frontscheibenüberwachung aufgedeckt wird. Die Empfangslinse eines Laserscanners ist üblicherweise eine Mehrzonenlinse mit einer Nahbereichszone im Zentrum, um zumindest einigermaßen konstante Pegel unabhängig vom Objektabstand zu empfangen, also eine möglichst konstante Signaldynamik zu erzielen. Bei einer Abdeckung dieser Nahbereichszone durch ein Abschattungsobjekt auf der Frontscheibe erleidet der Laserscanner damit im Nahbereich eine große Einbuße seiner Detektionsfähigkeit. In koaxialen Systemen fällt eine solche Manipulation sofort auf, weil auch der Sendestrahl blockiert wird und sich beispielsweise durch starkes Streulicht bemerkbar macht. In einem biaxialen System dagegen verläuft der Sendelichtstrahl nicht durch die Nahbereichszone. Es ist möglich, der Frontscheibenüberwachung die zusätzliche Funktion zu geben, solche Abschattungsobjekte aufzudecken. Dazu müssen aber besonders dicht liegende Testkanäle verwendet werden.

Die EP 2 237 065 A1 offenbart einen Laserscanner, bei dem sich die komplette Messeinheit mit Lichtquelle und Detektor dreht. Auf dem entsprechenden Rotor sind außerdem eine Testlichtquelle und ein Testdetektor untergebracht, während außerhalb des Gehäuses ein Reflektorelement angeordnet ist. So tasten Testlichtquelle und Testdetektor die Frontscheibe im Laufe der Umdrehung mit Hilfe des Reflektorelements ab. Derartige Systeme mit drehendem Messkopf haben aber den Nachteil, dass eine Datenverbindung und Energieversorgung zwischen stationärem Teil und drehendem Messkopf geschaffen werden muss. Außerdem ist der Testlichtdetektor zwangsläufig nach außen gerichtet und kann deshalb relativ leicht durch Fremdlicht gestört werden.

Aus der EP 2 508 914 A1 ist ein Laserscanner bekannt, der eine röhrenförmige Kanaltrennung aufweist, die den Sendepfad von dem Empfangspfad abschirmt. An der Kanaltrennung ist ein passives optisches Element angebracht, beispielsweise ein Retroreflektor oder eine Prismenfolie. Zur Überwachung eines Verschmutzungsgrads der Frontscheibe trifft Überwachungslichtstrahlung von einem Sender über das optische Element auf einen Empfänger und tritt dabei zweifach durch die Frontscheibe.

Die WO 2007/031359 A1 offenbart ein elektro-optisches Messgerät zur Entfernungsmessung nach einem Laufzeitverfahren, bei dem Sender und Empfänger biaxial angeordnet sind. Die Empfangslinse weist ein ringförmiges Nahbereichselement zur Parallaxen-Kompensation auf.

Es ist daher Aufgabe der Erfindung, die Frontscheibenüberwachung zu verbessern.

Diese Aufgabe wird durch einen optoelektronischen Sensor und ein Verfahren zur Transmissionsüberwachung einer Frontscheibe eines optoelektronischen Sensors nach Anspruch 1 beziehungsweise 10 gelöst. Ein Testlichtsender, ein Testlichtempfänger und ein Testlichtreflektor spannen einen Testkanal oder Testlichtpfad auf, um die Lichtdurchlässigkeit der Frontscheibe zu prüfen. Dabei geht die Erfindung von dem Grundgedanken aus, mit einem Testkanal die Transmission nicht nur punktuell, sondern über einen größeren Bereich der Frontscheibe zu überwachen. Dazu wird der Testlichtreflektor mit der Ablenkeinheit mitbewegt. Wenn die Ablenkeinheit wie häufig ein Drehspiegel ist, wird vorzugsweise der Testlichtreflektor daran angebracht und vollzieht so die Drehbewegung mit.

Die Erfindung hat den Vorteil, dass mit einfachen Mitteln ortsaufgelöste Transmissionsmessung ermöglicht wird, die eine nicht mehr tolerierbare Einbuße beispielsweise durch Verschmutzung oder Abschattungsobjekte erkennt und damit die Detektionsfähigkeit sicherstellt. Dafür sind wegen des mitbewegten Testlichtreflektors deutlich weniger Testlichtpfade nötig, und das System wird weniger komplex, kostengünstiger und kleiner. Durch einen innen liegenden Lichtweg auf dem Testlichtpfad und eine nach innen gerichtete Empfangsachse wird außerdem eine erhöhte Robustheit gegenüber Störungen durch Fremdlicht und Reflektoren erreicht. Es entsteht mehr Freiheit hinsichtlich der auf der Frontscheibe überwachten Positionen. Durch eine kleine Fläche des Testlichtreflektors kann ein mechanisches Bauteil zur Abschattung und Kanaltrennung entfallen.

Der Testlichtsender und der Testlichtempfänger sind bevorzugt nicht mit der Ablenkeinheit mitbewegt angeordnet. Damit befinden sich Testlichtsender und Testlichtempfänger im ruhenden Teil des Sensors, etwa einem Sockel oder Gehäuse, in dem die bewegliche Ablenkeinheit montiert ist. Das verringert die Komplexität des Systems deutlich, da keine Versorgung und kein Datenaustausch zu einem beweglichen oder rotierenden System geschaffen werden muss. Andererseits sehen einige Sensoren bereits als Ablenkeinheit einen beweglichen Messkopf für Lichtsender und Lichtempfänger vor. Prinzipiell ist also das Problem der Anbindung beherrschbar, und deshalb kann eine solche Anbindung auch für die Transmissionsüberwachung hinzugefügt oder sogar in einem Sensor mit beweglichem Messkopf ohne wesentlichen Zusatzaufwand mitbenutzt werden. Folglich ist durchaus denkbar, den Testlichtsender und Testlichtempfänger ebenfalls mitbewegen zu lassen, beispielsweise über eine Art Balkon, der an der beweglichen Ablenkeinheit angebracht ist, um Testlichtsender und Testlichtempfänger oder alternativ in Umkehrung des Lichtwegs den Testlichtreflektor mitbewegt zu haltern. Es sind mehrere Testlichtsender und Testlichtempfänger in einer Umfangsrichtung um die Ablenkeinheit verteilt angeordnet. Dabei bilden noch bevorzugter jeweils ein Testlichtsender und ein Testlichtempfänger ein Paar, und mehrere solche Paare sind über den Umfang verteilt, um eine umlaufende Frontscheibe in mehreren Bereichen ortsaufgelöst zu überwachen. Da der Testlichtreflektor mitbewegt ist, genügt ein einziger Testlichtreflektor, um mit den mehreren Paaren entsprechende Testkanäle zu bilden. Durch zeitliche Ansteuerung der Testkanäle während des Betriebs können unterschiedliche Positionen auf der Frontscheibe abgetastet werden. Denkbar ist natürlich dennoch, mehrere Testlichtreflektoren in unterschiedlichen Winkeln an der Ablenkeinheit anzubringen.

Die Auswertungseinheit ist dafür ausgebildet, aus dem Testlichtsignal eine Information über die Stellung der Ablenkeinheit zu gewinnen. Die Testpfade sind über den mitbewegten Testlichtreflektor an die Ablenkeinheit gebunden. Deshalb ist auch möglich, zumindest grobe Informationen über die jeweilige Position, insbesondere Winkelstellung der Ablenkeinheit aus der Identität des jeweils aktiven Testkanals und möglicherweise auch einer von der Position der Ablenkeinheit abhängigen erwarteten Intensität des Testlichts zu gewinnen. Damit kann ein sonst üblicher Encoder zur Erfassung der Winkelstellung der Ablenkeinheit ergänzt oder sogar ersetzt werden. Zumindest ergibt sich eine diversitär-redundante zweite Quelle für Informationen über die Winkelstellungen, die gerade in der Sicherheitstechnik für eine Überprüfung und Plausibilisierung des Encoders genutzt werden kann.

Der Testlichtreflektor weist bevorzugt retroreflektierende Eigenschaften auf. Dazu kann der Testlichtreflektor ein Retroreflektor beispielsweise mit Strukturen ähnlich einem Katzenauge sein. Alternativ weist der Testlichtreflektor eine oder mehrere konvexe oder konkave Spiegelflächen oder mehrere im Winkel zueinander stehende plane Spiegelflächen auf, die zumindest einen Teil des einfallenden Testlichts in die Einfallsrichtung zurückwerfen. Auch das Reflexionsverhalten eines derartigen Spiegels, nicht nur ein Retroreflektor im engeren Sinne, wird hier als retroreflektierende Eigenschaft aufgefasst. Die retroreflektierenden Eigenschaften bewirken, dass das Testlicht während der Bewegung des Testlichtreflektors über einen ganzen Winkelbereich zu dem Testlichtempfänger zurückkehrt und so einen Testlichtpfad bildet. Damit kann die Frontscheibe über einen entsprechenden Winkelbereich auf Transmission geprüft werden, und es genügen wesentlich weniger Testkanäle, um die Frontscheibe abzudecken. Ohne retroreflektierende Eigenschaften, beispielsweise als einfache Spiegelfläche, kann die Frontscheibe mit dem Testlichtreflektor nur in einem kleineren Bereich getestet werden, da nur in einem begrenzten Winkelbereich ein vollständiger Testlichtpfad gebildet wird. Durch die endliche Ausdehnung der Spiegelfläche wird aber auch mehr als nur ein punktueller Bereich getestet, so dass auch eine einfache Spiegelfläche gegenüber einem herkömmlichen statischen Testpfad schon deutliche Vorteile bringt. Bei Einsatz eines Retroreflektors müssen Testlichtsender und Testlichtempfänger sehr nahe beieinander liegen. Mit einem planen Spiegel besteht dagegen die Freiheit, den Testlichtempfänger an einer anderen Stelle zu platzieren als den Testlichtsender.

Der Testlichtreflektor weist bevorzugt mehrere übereinander angeordnete und/oder gegeneinander verkippte Teilreflektoren auf. Mit derartigen gestaffelten Teilreflektoren wird der Testlichtpfad aufgefächert und ermöglicht insbesondere mehrere Abtastungen der Frontscheibe in unterschiedlichen Höhenlagen. Ein einfacher Testlichtempfänger kann diese mehreren Abtastungen nur in Summe auswerten, aber jedenfalls eine Beeinträchtigung der Transmission aufdecken. Mit einem ortsauflösenden Testlichtempfänger wird auch erkannt, in welcher Höhenlage die Transmission verändert ist.

Die Frontscheibe weist bevorzugt die Form eines Rotationskörpers und im Schnitt zu einer Mittenachse des Rotationskörpers eine nach innen weisende Kontur auf, wobei Testlichtsender und Testlichtempfänger in einem Bereich der Frontscheibe angeordnet sind, wo diese einen kleinen Radius aufweist. Beispiele für diese Form der Frontscheibe sind ein Kegelstumpf oder ein Kugelausschnitt. Dabei lässt die Frontscheibe durch die nach innen weisende Kontur gegenüber einem entsprechenden Zylinder einen Freiraum, in dem die Testlichtsender und Testlichtempfänger angeordnet werden können. Da sich der Testlichtreflektor an der Ablenkeinheit befindet, entsteht ein sehr weit innen liegender Testlichtpfad, der kaum durch Fremdlicht gestört wird und entsprechend robust ist.

Die Frontscheibe weist bevorzugt einen umlaufenden Sockel auf. Damit wird der Radius der nach innen weisenden Kontur rasch wieder nach außen zurückgeführt. Die Testlichtempfänger und Testlichtsender können unter diesem Sockel angebracht werden und liegen so auch geschützt im Inneren des Sensors. Der Testlichtpfad durchdringt dann zuerst den Sockel ins Freie und anschließend für den eigentlichen Transmissionstest die eigentliche Frontscheibe bis zu dem Testlichtreflektor.

Lichtsender und Lichtempfänger des optischen Abstandsmesssystems sind bevorzugt in einem biaxialen Aufbau nebeneinander mit zueinander parallelen optischen Achsen angeordnet. Herkömmlich wird stattdessen häufig ein koaxialer Aufbau gewählt, bei dem der Sendestrahl mit seinem geringeren Querschnitt zentral im Empfangsstrahl liegt. Eine biaxiale Anordnung ist aber gerade bei sehr kleiner Bauweise einfacher.

Dem Lichtempfänger ist bevorzugt eine Empfangslinse vorgeordnet, welche eine Nahbereichszone aufweist, die deutlich größer ist als die Verdeckung durch ein normiertes Abdeckungsobjekt. Die Nahbereichszone dient wie eingangs erläutert dazu, die Signaldynamik im Nahbereich in einer gewünschten Weise anzupassen. Herkömmlich ist es möglich, den Nahbereich mit kleinen Objekten zu verdecken, und deshalb muss eine entsprechend aufwändige Transmissionsmessung der Frontscheibe mit sehr vielen Testkanälen durchgeführt werden. Eine vergrößerte Nahbereichszone ist gegen diese Störung beziehungsweise Manipulation mit kleinen Objekten unempfindlich, da sie nicht mehr so einfach verdeckt werden kann. Dementsprechend genügen für die Transmissionsmessung deutlich weniger Testkanäle, und die Detektionssicherheit erhöht sich. Beispiele für vergrößerte Nahbereichszonen sind auch das Vorsehen mehrerer voneinander separierter oder verteilter Nahbereichszonen oder beispielsweise eine ringförmige Nahbereichszone insbesondere am Außenrand der Empfangslinse.

Der Sensor ist vorzugsweise als Sicherheitslaserscanner ausgebildet, wobei die Auswertungseinheit dafür ausgebildet ist, die Position erfasster Objekte mit Schutzfeldern zu vergleichen und bei Erkennung eines unzulässigen Schutzfeldeingriffs einen sicheren Ausgang mit einem Abschaltsignal anzusteuern. Für derartige Anwendungen ist insbesondere die vereinfachte Frontscheibenüberwachung von Vorteil.

Das erfindungsgemäße Verfahren kann auf ähnliche Weise weitergebildet werden und zeigt dabei ähnliche Vorteile. Derartige vorteilhafte Merkmale sind beispielhaft, aber nicht abschließend in den sich an die unabhängigen Ansprüche anschließenden Unteransprüchen beschrieben.

Die Erfindung wird nachstehend auch hinsichtlich weiterer Merkmale und Vorteile beispielhaft anhand von Ausführungsformen und unter Bezug auf die beigefügte Zeichnung näher erläutert. Die Abbildungen der Zeichnung zeigen in:
- Fig. 1: eine Schnittdarstellung einer Ausführungsform eines Laserscanners;
- Fig. 2: eine dreidimensionale Darstellung einer Frontscheibe eines Laserscanners zu Illustration eines Testlichtpfades;
- Fig. 3: eine schematische Draufsicht auf eine Ablenkeinheit eines Laserscanners in zwei unterschiedlichen Winkelstellungen mit zugehörigen Testlichtpfaden;
- Fig. 4: eine schematische Schnittdarstellung eines Ausschnitts einer Frontscheibe eines Laserscanners mit Testlichtpfaden bei einem geteiltem Testlichtreflektor zur Frontscheibenüberwachung in mehreren Höhenlagen; und
- Fig. 5: eine dreidimensionale Ansicht einer Empfangslinse mit erweiterter Nahzone.

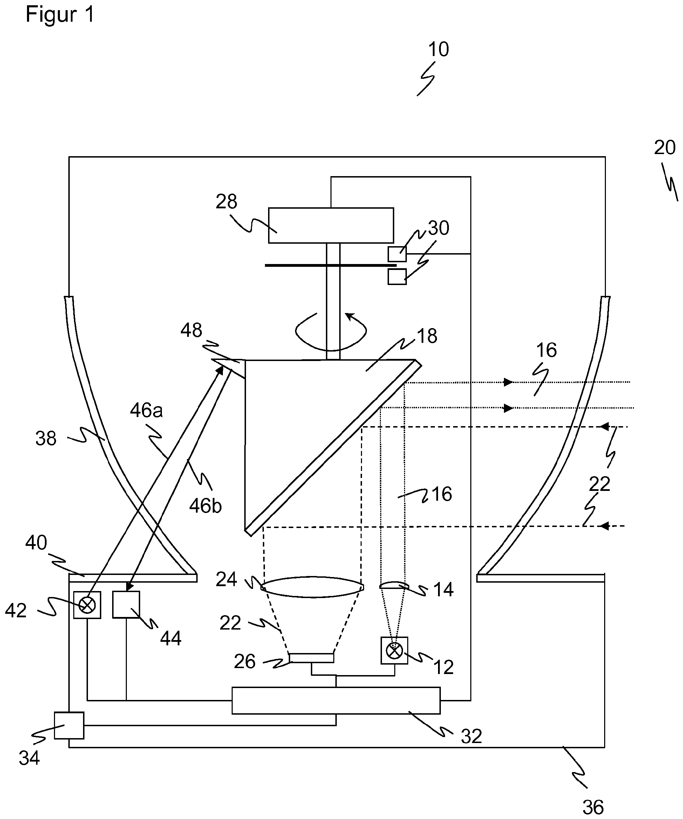

Fig. 1 zeigt eine schematische Schnittdarstellung durch einen erfindungsgemäßen Laserscanner 10, der insbesondere als entfernungsmessender Sicherheitslaserscanner ausgebildet ist. Ein Lichtsender 12, etwa ein Laser in Form eines Kantenemitters oder eines VCSELs, sendet ein Lichtsignal beispielsweise in Form von kurzen Lichtimpulsen oder periodisch amplitudenmoduliertem Licht aus. Das Sendelicht wird von einer Sendeoptik 14 zu einem ausgesandten Lichtstrahl 16 kollimiert, der über eine bewegliche Ablenkeinheit 18 in einen Überwachungsbereich 20 gelenkt und dort von einem gegebenenfalls vorhandenen Objekt remittiert oder reflektiert wird. Ein Teil dieses Lichts kehrt als einfallender remittierter Lichtstrahl 22 zu dem Laserscanner 10 zurück und wird von der Ablenkeinheit 18 zu einer Empfangsoptik 24 umgelenkt und von dort auf einen Lichtempfänger 26 gebündelt, beispielsweise eine Photodiode oder APD (Avalanche Photo Diode).

Die Ablenkeinheit 18 kann als Schwingspiegel ausgestaltet sein, ist aber in der Regel ein Drehspiegel, der durch Antrieb eines Motors 28 kontinuierlich rotiert. Die jeweilige Winkelstellung der Ablenkeinheit 18 wird über einen Encoder 30 erfasst. Der von dem Lichtsender 12 erzeugte Lichtstrahl 16 überstreicht somit den durch die Bewegung erzeugten Überwachungsbereich 20. Wird von dem Lichtempfänger 26 ein remittierter Lichtstrahl 22 aus dem Überwachungsbereich 20 empfangen, so kann aus der Winkelstellung der Ablenkeinheit 18 mittels des Encoders 30 auf die Winkellage des Objektes in dem Überwachungsbereich 20 geschlossen werden.

Zusätzlich wird die Lichtlaufzeit von Aussenden des Lichtstrahls 16 bis zu dem Empfang des remittierten Lichtstrahls 22 nach Reflexion an dem Objekt in dem Überwachungsbereich 20 ermittelt. Dazu sind alle Lichtlaufzeitverfahren denkbar. Aus der Lichtlaufzeit wird unter Verwendung der Lichtgeschwindigkeit auf die Entfernung des Objektes von dem Laserscanner 10 geschlossen. Diese Auswertung erfolgt in einer Auswertungseinheit 32, die dafür mit dem Lichtsender 12, dem Lichtempfänger 26, dem Motor 28 und dem Encoder 30 verbunden ist.

Über den Winkel und die Entfernung stehen dann zweidimensionale Polarkoordinaten aller Objekte in dem Überwachungsbereich 20 zur Verfügung. In dem Überwachungsbereich 20 können somit zweidimensionale Schutzfelder definiert werden, in die unzulässige Objekte wie Bedienpersonen oder deren Körperteile nicht eingreifen dürfen. Erkennt die Auswertungseinheit 32 einen unzulässigen Schutzfeldeingriff, so wird über einen sicheren Ausgang 34 (OSSD, Output Signal Switching Device) ein sicherheitsgerichtetes Abschaltsignal ausgegeben, um beispielsweise eine überwachte gefährliche Maschine anzuhalten oder in eine ungefährliche Position zu verbringen. Alternativ werden über den Ausgang 34 Messdaten ausgegeben, vor allem wenn der Laserscanner 10 kein Sicherheitslaserscanner ist und dementsprechend keine Schutzfelder überwacht.

Alle genannten Funktionskomponenten sind in einem Gehäuse 36 angeordnet, das im Bereich des Lichtaus- und Lichteintritts eine umlaufende Frontscheibe 38 aufweist. Die Frontscheibe 38 ist häufig, aber nicht zwingend als Rotationskörper ausgebildet und muss sich auch in beiden Fällen nicht unbedingt über 360° erstrecken, so dass dann ein gewisser Winkelbereich als Totzone verbleibt.

Die Frontscheibe 38 weist eine nach innen gerichtete Kontur auf, die im Beispiel der Figur 1 kelchartig gekrümmt ist. Eine andere Krümmung und sogar eine gerade Kontur sind aber auch denkbar, was dann insgesamt zu der Form eines Kegelstumpfes führt. Im unteren Bereich wird die Frontscheibe 38 durch einen Sockel 40 abgeschlossen, der den Radius wieder zurückführt, der sich oberhalb wegen der nach innen gerichteten Kontur verringert.

Unter diesem Sockel 40 sind ein Testlichtsender 42 und ein Testlichtempfänger 44 angeordnet. Der Testlichtsender 42 ist eine beliebige Lichtquelle, deren Spektrum vorzugsweise zur Vermeidung von Streulicht von dem Lichtsender 12 abweicht, jedoch die Frontscheibe 38 in einem relevanten Wellenlängenbereich auf Transmission testet. Der Testlichtempfänger kann eine einfache Photodiode sein, wobei aber in einigen Ausführungsformen eine Ortsauflösung von Vorteil ist. Weitere Paare von Testlichtsendern und Testlichtempfängern sind vorzugsweise um den Umfang der Frontscheibe 38 verteilt, aber in Figur 1 nicht dargestellt. Das Testlicht des Testlichtsenders 42 tritt auf einem Testlichtpfad 46a-b zunächst durch den Sockel 40 ins Freie und durchstrahlt dann die Frontscheibe 38 ins Innere des Laserscanners 10. Dort wird es an einem Testlichtreflektor 48 reflektiert, der an der Ablenkeinheit 18 angebracht ist, und kehrt zur Vervollständigung des Testlichtpfads 46a-b unter erneutem Durchstrahlen von Frontscheibe 38 und Sockel 40 zu dem Testlichtempfänger 44 zurück. Alternativ liegt der Testlichtempfänger 44 innen, so dass die Frontscheibe 38 nur einmal durchstrahlt wird. Anhand des Testsignals des Testlichtempfängers 44 kann die Auswertungseinheit 32 beispielsweise durch Vergleich mit einem Sollpegel prüfen, ob die Frontscheibe 38 an den Durchstoßpunkten des Testlichtpfades 46a-b in ihrer Lichtdurchlässigkeit beeinträchtigt ist. Dadurch wird ein Test auf homogene Verschmutzung oder die Anwesenheit von Abschattungsobjekten auf der Frontscheibe 38 möglich. In einem Sicherheitslaserscanner wird bei Erkennung einer Beeinträchtigung, welche die sichere Funktion nicht mehr gewährleistet, eine sicherheitsgerichtete Abschaltung ausgelöst. Ein nicht in der Sicherheitstechnik eingesetzter Sensor könnte beispielsweise stattdessen auch nur eine Wartungsaufforderung anzeigen.

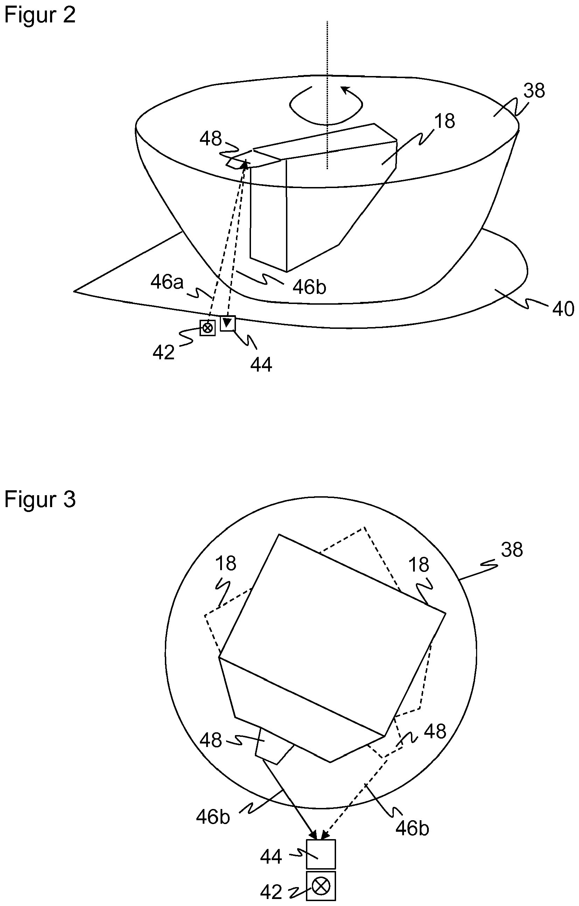

Der Testlichtreflektor 48 vollzieht die Drehbewegung der Ablenkeinheit 18 mit. Dadurch ist auch der Testlichtpfad 46a-b dynamisch, da sich einer der Endpunkte mit dem Testlichtreflektor 48 bewegt. Wie im Folgenden anhand der Figuren 2 bis 4 noch näher erläutert, kann die Frontscheibe 38 so nicht nur punktuell, sondern im Verlauf der Drehbewegung über einen ganzen Bereich auf ihre Transmissionseigenschaften überwacht werden. Die Auswertungseinheit 32 muss die Drehbewegung natürlich bei Ansteuerung der von den Testlichtsendern 42 und Testlichtempfängern 44 über den Testlichtreflektor 48 gebildeten Testkanäle berücksichtigen. Umgekehrt können die Testkanäle auch genutzt werden, um eine Information über die Winkelstellung der Ablenkeinheit 18 zu gewinnen. Eine grobe Winkelinformation ist bereits in der Position desjenigen Paares von Testlichtsender 42 und Testlichtempfänger 44 enthalten, die jeweils aktuell über den Testlichtreflektor 48 ein Testlichtsignal erzeugen können. Je nach Anordnung des Testlichtpfades 46a-b und Eigenschaften des Testlichtreflektors 48 können aber auch Intensität und Auftreffpunkt des Testlichts auf dem Testlichtempfänger 44 mit der jeweiligen Position des Testlichtreflektors 48 variieren. Dadurch kann auch eine genauere Winkelinformation erfasst werden, mit der beispielsweise die Messinformation des Encoders 30 auf Plausibilität geprüft oder sogar der Encoder 30 ersetzt werden kann.

Der Laserscanner 10 gemäß Figur 1 hat eine biaxiale Anordnung, in welcher der ausgesandte Lichtstrahl 16 neben dem einfallenden remittierten Lichtstrahl 22 verläuft. Das ist aber nur beispielhaft zu verstehen. Eine Transmissionsüberprüfung der Frontscheibe 38 über einen mitbewegten Testlichtreflektor 48 ist auch in jedem anderen Aufbau eines entsprechenden optoelektronischen Sensors mit periodisch bewegter Ablenkeinheit möglich.

Figur 2 zeigt eine weitere dreidimensionale Ansicht der Frontscheibe 38 mit Sockel 40 und der Ablenkeinheit 18 mit dem mitbewegten Testlichtreflektor 48. Zur besseren Übersicht ist erneut nur ein Testkanal mit einem Paar eines Testlichtsenders 42 und eines Testlichtempfängers 44 dargestellt.

Figur 3 ist eine ergänzende zugehörige Draufsicht bei zwei beispielhaften Winkelstellungen der Ablenkeinheit 18 und damit auch des Testlichtreflektors 48, die jeweils mit durchgezogenen beziehungsweise gestrichelten Linien gezeigt sind.

Durch die Drehung der Ablenkeinheit 18 verlagert sich der Testlichtpfad 46a-b, und der Durchstoßpunkt durch die Frontscheibe 38 wandert über einen ausgedehnten Bereich. Die Transmissionsprüfung erfolgt deshalb im selben Testkanal nicht nur an einem festen Azimutwinkel, sondern über einen ganzen Azimutwinkelbereich. Dadurch genügt eine geringere Anzahl von Testkanälen mit jeweils einem statischen Paar aus Testlichtsender 42 und Testlichtempfänger 44, um die Frontscheibe 38 für alle relevanten Azimutwinkel zu prüfen.

Der Testlichtreflektor 48 weist vorzugsweise retroreflektierende Eigenschaften auf. Dadurch wird das Testlicht wie in Figur 3 zu erkennen in unterschiedlichen Azimutwinkeln wieder zu dem Testlichtempfänger 44 zurückgeworfen. Der Testlichtreflektor 48 ist dazu vorzugsweise als Retroreflektor oder Anordnung mehrerer Retroreflektoren ausgebildet. Alternativ kann ein konturierter Spiegel verwendet werden, der Licht aus unterschiedlichen Einfallswinkeln durch seine Neigung oder mit Mehrfachreflexionen zumindest teilweise zurückwirft. Auch mit einer einfachen Spiegelfläche als Testlichtreflektor 48 ist eine Transmissionsprüfung möglich. Dabei besteht mehr Freiheit in der Anordnung von Testlichtsender 42 und Testlichtempfänger 44, dafür wird nur ein kleinerer Bereich der Frontscheibe 38 getestet.

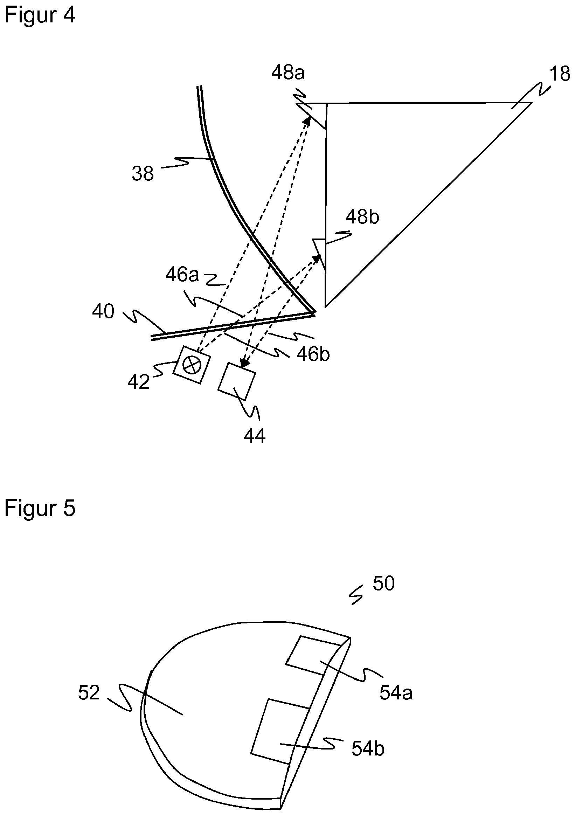

Figur 4 zeigt eine vereinfachte Schnittdarstellung der Frontscheibe 38 und eines Testkanals in einer weiteren Ausführungsform. Dabei weist der Testlichtreflektor 48 zwei oder mehr Teilreflektoren 48a-b auf, die übereinander angeordnet und/oder unterschiedlich verkippt sind. Während die Mitbewegung des Testlichtreflektors 48 für eine Abtastung der Frontscheibe 38 über einen Azimutwinkelbereich sorgt, ermöglichen die Teilreflektoren 48a-b auch eine Abtastung über verschiedene Polarwinkel oder Höhenbereiche. Meist genügt es, in dem Testlichtempfänger 44 nur ein summarisches Gesamtsignal aller Teilreflektoren 48a-b zu erzeugen, da damit bereits eine sicherheitskritische Beeinträchtigung erkannt wird. Soll jedoch eine Verschmutzung oder ein Abschattungsobjekt lokalisiert werden, so kann der Testlichtempfänger 44 auch ortsauflösend ausgebildet werden.

Durch die Mitbewegung des Testlichtreflektors 48 kann die benötigte Anzahl von Testkanälen bereits erheblich reduziert werden. Wie einleitend erläutert, muss bei einem biaxialen Aufbau des Laserscanners 10 wie in Figur 1 zusätzlich noch gewährleistet sein, dass ein Abschattungsobjekt nicht die Nahzone der Empfangsoptik 24 verdeckt.

Figur 5 zeigt eine Empfangslinse 50, die in der Empfangsoptik 24 oder als Empfangsoptik 24 eingesetzt werden kann und bei der das Signal von Objekten im Nahbereich nicht mehr vollständig durch einzelne kleine Abschattungsobjekte verdeckt werden kann. Dadurch steigt die Manipulationsfestigkeit, und es ist nicht mehr erforderlich, dass die Transmissionsüberwachung diese Funktion der Manipulationserkennung übernimmt. Das ermöglicht eine weitere Reduktion der Anzahl benötigter Testkanäle.

Die Linse 50 weist einen Hauptteil 52 auf, der konvex oder plankonvex ausgebildet ist. Insgesamt handelt es sich deshalb um eine Sammellinse zur Bündelung des remittierten Lichtstrahls 22. Auf der rechten Seite in Figur 5 ist die Linse abgeschnitten, um Sende- und Empfangspfad näher aneinanderzurücken. Dieses Abschneiden ist nicht zwingend erforderlich.

Außerdem weist die Linse 50 eine erweiterte, hier zweigeteilte Nahzone 54a-b auf. Eine Nahzone an sich ist bekannt und dient wie einleitend beschrieben dazu, durch andere Bündelungseigenschaften als der Hauptteil 52 die Signaldynamik für kurze Entfernungen anzuheben. Durch die räumliche Trennung in zwei oder mehr Nahzonen 54a-b wird zusätzlich erreicht, dass das Signal im Nahbereich nicht mehr vollständig durch einzelne kleine Objekte verdeckt werden kann. Deshalb wird so eine verbesserte Robustheit gegenüber punktuellen Verschmutzungen und Manipulationen bis zu einer festgelegten Maximalgröße des Stör- oder Manipulationsobjekts erreicht.

Eine geteilte Nahzone 54a-b ist nur ein Beispiel für eine Verteilung der Nahzone auf einen größeren Bereich. Der geschilderte Vorteil kann auch erzielt werden, wenn sich die Nahzone auf andere Weise auf einen Bereich erstreckt, der durch kleine Objekte nicht verdeckt werden kann. Ein weiteres Beispiel ist daher eine ringförmige Nahzone in der Nähe des Außenrands der Empfangslinse 50.

Die bisher beschriebenen Ausführungsformen befassen sich mit einem mitbewegten oder mitdrehenden Testlichtreflektor 48 und statischen Testlichtsendern 42 beziehungsweise Testlichtempfängern 44. Es ist in Ausführungsformen, die nicht in den Schutzbereich der Ansprüche fallen, auch denkbar, die Testlichtsender 42 und Testlichtempfänger 44 auf einer Art Balkon der Ablenkeinheit 18 unterzubringen und so ebenfalls mitzudrehen. Dann genügt ein einziges Paar von Testlichtsender 42 und Testlichtempfänger 44, um die Frontscheibe 38 im Verlauf der Drehbewegung in allen Azimutwinkeln abzutasten.

Diese Ausführungsformen einer Transmissionsmessung mit mitbewegtem Testlichtreflektor 48 sollen abschließend als Aufhänger genutzt werden, systematisch aufzulisten, wie Testkanäle mit statischen oder mitbewegten Elementen aufgebaut werden können.

In einer ersten Familie sind Testlichtpfade reflexiv aus Testlichtsender, Testlichtreflektor und Testlichtempfänger gebildet. Jedes dieser Elemente kann statisch oder mitbewegt sein, so dass sich insgesamt acht Kombinationen ergeben. In vier dieser Kombinationen bewegt sich der Testlichtsender gegenüber dem Testlichtempfänger. Das ist für einen reflexiven Testlichtpfad keine sinnvolle Konfiguration. Testlichtsender und Testlichtempfänger sollten vielmehr entweder beide statisch oder beide mitbewegt sein, damit sie stets statisch zueinander und häufig nebeneinander liegen. In zwei der verbleibenden Kombinationen bewegt sich der Testlichtreflektor mit der Ablenkeinheit. Sind Testlichtsender und Testlichtempfänger statisch, so entspricht das den oben ausführlich anhand der Figuren erläuterten Ausführungsformen. Bei Mitbewegung von Testlichtsender und Testlichtempfänger entsteht die ebenfalls oben im Anschluss an die Figurenbeschreibung angesprochene Ausführungsform. In den verbleibenden beiden Kombinationen ist der Testlichtreflektor statisch. Das entspricht dann bei ebenfalls statischem Testlichtsender und Testlichtempfänger dem Vorgehen nach der einleitend genannten DE 43 45 446 C2 und bei mitbewegtem Testlichtsender und Testlichtempfänger nach der einleitend genannten EP 2 237 065 A1.

In einer zweiten Familie sind Testlichtpfade direkt, also ohne Testlichtreflektor gebildet. Das Paar von Testlichtsender und Testlichtempfänger ist dabei direkt durch die Frontscheibe hindurch aufeinander ausgerichtet, und ein Element befindet sich bezüglich der Frontscheibe innen und eines außen. Bei Ausbildung der Frontscheibe mit einem Sockel können durch zweimaliges Durchstoßen der Frontscheibe Testlichtsender und Testlichtempfänger beide innen liegen, wobei dann ein Element unter dem Sockel angeordnet ist. Dabei beide Elemente statisch zu lassen, ist eine bekannte und funktionsfähige Lösung, die allerdings eine entsprechende Vielzahl von Testkanälen benötigt. Das außen liegende Element statisch zu lassen und das innen liegende Element mit der Ablenkeinheit zu bewegen ist möglich, aber dazu muss ein mitbewegtes Element angesteuert und versorgt werden. Außerdem sollte vorzugsweise der Testlichtsender mitbewegt werden, weil sonst der Testlichtempfänger nach außen blickt und so auch Fremdlicht erfasst. Prinzipiell könnte auch die Ablenkeinheit eine Art Balkon aufweisen, der unter den Sockel der Frontscheibe reicht. Auf diese Weise können Testlichtsender und Testlichtempfänger mitbewegt werden, und es genügt ein einziger Testkanal. Allerdings stellt dieser Balkon eine große mechanische Herausforderung dar, um nachteilige Effekte auf die Ablenkeinheit durch eine Unwucht zu vermeiden.

In einer dritten Familie werden Testlichtpfade mit dem eigentlichen Scanstrahl des Lichtsenders 12 gebildet. Der Lichtsender 12 fungiert also zugleich als Testlichtsender. Es sind mit dieser Ersetzung prinzipiell alle in den vorigen Absätzen genannten Varianten möglich, aber es besteht jeweils eine große Gefahr von Übersprechen in den eigentlichen Messkanal, da in diesem Fall ein kleiner Teil des Messstrahls abgezweigt und nach einmaliger oder mehrmaliger Durchstrahlung der Frontscheibe auf den Testlichtempfänger gelenkt werden müsste. Dadurch besteht nicht mehr die Möglichkeit, dieses für das Messsystem extrem schädliche optische Echo aus dem Nahbereich gezielt zu unterdrücken.

## Patentansprüche

1. Optoelektronischer Sensor (10), insbesondere Laserscanner, zur Erfassung von Objekten in einem Überwachungsbereich (20), der Folgendes aufweist:
- eine Frontscheibe (38),
- einen Lichtsender (12) zum Aussenden eines Lichtstrahls (16),
- eine bewegliche Ablenkeinheit (18) zur periodischen Abtastung des Überwachungsbereichs (20) mit dem Lichtstrahl (16),
- einen Lichtempfänger (26) zum Erzeugen eines Empfangssignals aus dem von den Objekten remittierten Lichtstrahl (22),
- mindestens einen Testlichtsender (42), mindestens einen Testlichtempfänger (44) und mindestens einen Testlichtreflektor (48), die einen Testlichtpfad (46a-b) durch die Frontscheibe (38) aufspannen, wobei der Testlichtreflektor (48) mit der Ablenkeinheit (18) mitbewegt und der Testlichtsender (42) und der Testlichtempfänger (44) nicht mit der Ablenkeinheit (18) mitbewegt angeordnet sind, und eine Auswertungseinheit (32), die dafür ausgebildet ist, aus dem Empfangssignal Informationen über die Objekte in dem Überwachungsbereich (20) zu gewinnen sowie eine beeinträchtigte Lichtdurchlässigkeit der Frontscheibe (38) aus einem Testlichtsignal zu erkennen, das der Testlichtempfänger (44) aus von dem Testlichtsender (42) ausgesandtem und an dem Testlichtreflektor (48) reflektierten Testlicht erzeugt,
**dadurch gekennzeichnet, dass** die Auswertungseinheit (32) dafür ausgebildet ist, aus dem Testlichtsignal eine Information über die Stellung der Ablenkeinheit (18) zu gewinnen.

2. Sensor (10) nach Anspruch 1,
wobei mehrere Testlichtsender (42) und Testlichtempfänger (44) in einer Umfangsrichtung um die Ablenkeinheit (18) verteilt angeordnet sind.

3. Sensor (10) nach einem der vorhergehenden Ansprüche,
wobei der Testlichtreflektor (48) retroreflektierende Eigenschaften aufweist.

4. Sensor (10) nach einem der vorhergehenden Ansprüche,
wobei der Testlichtreflektor (48) mehrere übereinander angeordnete und/oder gegeneinander verkippte Teilreflektoren (48a-b) aufweist.

5. Sensor (10) nach einem der vorhergehenden Ansprüche,
wobei die Frontscheibe (38) die Form eines Rotationskörpers und im Schnitt zu einer Mittenachse des Rotationskörpers eine nach innen weisende Kontur aufweist, und wobei Testlichtsender (42) und Testlichtempfänger (44) in einem Bereich der Frontscheibe (38) angeordnet sind, wo diese einen kleinen Radius aufweist.

6. Sensor (10) nach einem der vorhergehenden Ansprüche,
wobei die Frontscheibe (38) einen umlaufenden Sockel (40) aufweist.

7. Sensor (10) nach einem der vorhergehenden Ansprüche,
wobei Lichtsender (12) und Lichtempfänger (26) in einem biaxialen Aufbau nebeneinander mit zueinander parallelen optischen Achsen angeordnet sind.

8. Sensor (10) nach einem der vorhergehenden Ansprüche,
wobei dem Lichtempfänger (26) eine Empfangslinse (24) vorgeordnet ist, welche eine Nahbereichszone (54a-b) aufweist, die deutlich größer ist als die Verdeckung durch ein normiertes Abdeckungsobjekt.

9. Sensor (10) nach einem der vorhergehenden Ansprüche,
der als Sicherheitslaserscanner ausgebildet ist, wobei die Auswertungseinheit (32) dafür ausgebildet ist, die Position erfasster Objekte mit Schutzfeldern zu vergleichen und bei Erkennung eines unzulässigen Schutzfeldeingriffs einen sicheren Ausgang (34) mit einem Abschaltsignal anzusteuern.

10. Verfahren zur Transmissionsüberwachung einer Frontscheibe (38) eines optoelektronischer Sensors (10), insbesondere Laserscanners, mit einem Lichtsender (12) zum Aussenden eines Lichtstrahls (16), einer beweglichen Ablenkeinheit (18) zur periodischen Abtastung mit dem Lichtstrahl (16, 22) und einem Lichtempfänger (26) zum Erzeugen eines Empfangssignals aus dem von Objekten in einem Überwachungsbereich (20) remittierten Lichtstrahl (22), wobei Testlicht auf mehreren Testlichtpfaden (46a-b) durch die Frontscheibe (38) von jeweils einem Testlichtsender (42) ausgesandt, an einem Testlichtreflektor (48) reflektiert und in jeweils einem Testlichtempfänger (44) in ein Testlichtsignal umgewandelt wird und eine beeinträchtigte Lichtdurchlässigkeit der Frontscheibe (38) aus dem Testlichtsignal erkannt wird, wobei mehrere Testlichtsender (42) und Testlichtempfänger (44) nicht mitbewegt in einer Umfangsrichtung um die Ablenkeinheit (18) verteilt angeordnet sind und sich der Testlichtreflektor (48) mit der Ablenkeinheit (18) mitbewegt,
**dadurch gekennzeichnet,**
**dass** aus dem Testlichtsignal eine Information über die Stellung der Ablenkeinheit (18) gewonnen wird.

## Claims

1. An optoelectronic sensor (10), in particular a laser scanner, for detecting objects in a monitored zone (20), said optoelectronic sensor comprising:
- a front screen (38);
- a light transmitter (12) for transmitting a light beam (16);
- a movable deflection unit (18) for a periodical scanning of the monitored zone (20) by the light beam (16);
- a light receiver (26) for generating a received signal from the remitted light beam (22) remitted by the objects;
- at least one test light transmitter (42), at least one test light receiver (44) and at least one test light reflector (48) which form a test light path (46a-c) through the front screen (38), wherein the test light reflector (48) is arranged such that it moves along with the deflection unit (18), and wherein the test light transmitter (42) and the test light receiver (44) are not arranged such that they move along with the deflection unit (18), and an evaluation unit (32) which is configured to acquire information on the objects present in the monitored zone (20) from the received signal and to detect an impaired light transmissibility of the front screen (38) from a test light signal which the test light receiver (44) generates from test light which is transmitted from the test light transmitter (42) and which is reflected at the test light reflector (48),
**characterized in that** the evaluation unit (32) is configured to acquire information on the position of the deflection unit (18) from the test light signal.

2. The sensor (10) in accordance with claim 1,
wherein a plurality of test light transmitters (42) and test light receivers (44) are arranged distributed around the deflection unit (18) in a peripheral direction.

3. The sensor (10) in accordance with any of the preceding claims,
wherein the test light reflector (48) has retro-reflecting properties.

4. The sensor (10) in accordance with any of the preceding claims,
wherein the test light reflector (48) has a plurality of part reflectors (48a-b) which are arranged above one another and/or which are tilted with respect to one another.

5. The sensor (10) in accordance with any of the preceding claims,
wherein the front screen (38) has the shape of a rotational body and has an inwardly facing contour in a section thereof with respect to a central axis of the rotational body and wherein the test light transmitter (42) and the test light receiver (44) are arranged in a region of the front screen (38) where it has a small radius.

6. The sensor (10) in accordance with any of the preceding claims,
wherein the front screen (38) has a peripheral base (40).

7. The sensor (10) in accordance with any of the preceding claims,
wherein the light transmitter (12) and the light receiver (26) are arranged next to one another in a biaxial design with mutually parallel optical axes.

8. The sensor (10) in accordance with any of the preceding claims,
wherein a reception lens (24) is arranged upstream of the light receiver (26) and has a close range zone (54a-b) which is significantly larger than a masking by a normed cover object.

9. The sensor (10) in accordance with any of the preceding claims,
which is configured as a safety light scanner, wherein the evaluation unit (32) is configured to compare the position of detected objects with protected fields and to output a shut-down signal on recognizing an inadmissible intrusion into a protected field via a safe output (34).

10. A method for the transmission monitoring of a front screen (38) of an optoelectronic sensor (10), in particular a laser scanner, having a light transmitter (12) for transmitting a light beam (16), a movable deflection unit (18) for a periodical scanning by the light beam (16, 22) and a light receiver (26) for generating a received signal from the remitted light beam (22) remitted by the objects in the monitored zone (20), wherein test light is transmitted on a plurality of test light paths (46a-b) through the front screen (38) from a respective test light transmitter (42), is reflected at a test light reflector (48) and is converted into a test light signal in a respective test light receiver (44), and wherein an impaired light transmissivity of the front screen (38) is recognized from the test light signal, wherein a plurality of test light transmitters (42) and test light receivers (44) are arranged distributed in a circumferential direction around the deflection unit (18) without moving along with the deflection unit (18) and wherein the test light reflector (48) moves along with the deflection unit (18), **characterized in that** information on the position of the deflection unit (18) is acquired from the test light signal.

## Revendications

1. Capteur optoélectronique (10), en particulier scanneur laser, pour détecter des objets dans une zone à surveiller (20), comprenant ce qui suit :
- une vitre frontale (38),
- un émetteur de lumière (12) pour émettre un rayon lumineux (16),
- une unité de déviation mobile (18) pour le balayage périodique de la zone à surveiller (20) par le rayon lumineux (16),
- un récepteur de lumière (26) pour générer un signal de réception à partir du rayon lumineux (22) réémis par les objets,
- au moins un émetteur de lumière test (42), au moins un récepteur de lumière test (44) et au moins un réflecteur de lumière test (48) qui définissent un trajet de lumière test (46a - b) à travers la vitre frontale (38), dans lequel le réflecteur de lumière test (48) est déplacé avec l'unité de déviation (18), et l'émetteur de lumière test (42) et le récepteur de lumière test (44) sont agencés de manière à ne pas se déplacer avec l'unité de déviation (18), et une unité d'évaluation (32) réalisée pour récupérer des informations sur les objets dans la zone à surveiller (20) à partir du signal de réception et pour reconnaître une perméabilité entravée à la lumière de la vitre frontale (38) à partir du signal de lumière test que génère le récepteur de lumière test (44) à partir de la lumière test émise par l'émetteur de lumière test (42) et réfléchie sur le réflecteur de lumière test (48),
**caractérisé en ce que**
l'unité d'évaluation (32) est réalisée pour récupérer une information sur la position de l'unité de déviation (18) à partir du signal de lumière test.

2. Capteur (10) selon la revendication 1,
dans lequel plusieurs émetteurs de lumière test (42) et plusieurs récepteurs de lumière test (44) sont agencés en étant répartis dans une direction périphérique autour de l'unité de déviation (18).

3. Capteur (10) selon l'une des revendications précédentes,
dans lequel le réflecteur de lumière test (48) présente des propriétés rétro-réfléchissantes.

4. Capteur (10) selon l'une des revendications précédentes,
dans lequel le réflecteur de lumière test (48) comprend plusieurs réflecteurs partiels (48a - b) agencés les uns au-dessus des autres et/ou basculés les uns par rapport aux autres.

5. Capteur (10) selon l'une des revendications précédentes,
dans lequel la vitre frontale (38) a la forme d'un corps de rotation et présente en coupe un contour dirigé vers l'intérieur par rapport à un axe central du corps de rotation, dans lequel l'émetteur de lumière test (42) et le récepteur de lumière test (44) sont agencés dans une zone de la vitre frontale (38) où celle-ci présente un petit rayon.

6. Capteur (10) selon l'une des revendications précédentes,
dans lequel la vitre frontale (38) comprend un socle périphérique (40).

7. Capteur (10) selon l'une des revendications précédentes,
dans lequel l'émetteur de lumière (12) et le récepteur de lumière (26) sont agencés l'un à côté de l'autre dans une structure biaxiale ayant des axes optiques parallèles l'un à l'autre.

8. Capteur (10) selon l'une des revendications précédentes,
dans lequel est prévue, en amont du récepteur de lumière (26), une lentille de réception (24) qui présente une zone de région proche (54a - b) qui est nettement plus grande que le recouvrement par un objet de recouvrement normalisé.

9. Capteur (10) selon l'une des revendications précédentes,
qui est réalisé sous forme de scanneur laser de sécurité, dans lequel l'unité d'évaluation (32) est réalisée pour comparer la position d'objets détectés avec des champs de protection et pour piloter une sortie sûre (34) avec un signal de coupure lors de la reconnaissance d'une intervention inadmissible dans le champ de protection.

10. Procédé de surveillance de transmission d'une vitre frontale (38) d'un capteur optoélectronique (10), en particulier d'un scanneur laser, comprenant un émetteur de lumière (12) pour émettre un rayon lumineux (16), une unité de déviation mobile (18) pour le balayage périodique par le rayon lumineux (16, 22), et un récepteur de lumière (26) pour générer un signal de réception à partir du rayon lumineux (22) réémis par des objets dans une zone à surveiller (20), dans lequel une lumière test est émise sur plusieurs trajets de lumière test (46a - b) à travers la vitre frontale (38) d'un émetteur de lumière test (42) respectif, elle est réfléchie sur un réflecteur de lumière test (48) et elle est convertie en un signal de lumière test dans un récepteur de lumière test (44) respectif, et une perméabilité entravée à la lumière de la vitre frontale (38) est reconnue à partir du signal de lumière test, dans lequel plusieurs émetteurs de lumière test (42) et plusieurs récepteurs de lumière test (44) sont agencés en répartition dans une direction périphérique autour de l'unité de déviation (18) en n'étant pas déplacés, et le réflecteur de lumière test (48) est déplacé avec l'unité de déviation (18),
**caractérisé en ce que**
une information sur la position de l'unité de déviation (18) est récupérée à partir du signal de lumière test.
